## Europäisches Patentamt

## European Patent Office

## Office européen des brevets

(11) Numéro de publication: **0 227 543**
**B1**

(12) ## FASCICULE DE BREVET EUROPEEN

(45) Date de publication du fascicule du brevet:
**19.12.90**

(51) Int. Cl.⁵: **F15B 15/14, B23K 11/30**

(21) Numéro de dépôt: **86402786.7**

(22) Date de dépôt: **12.12.86**

(54) **Vérin bi-pression.**

(30) Priorité: **17.12.85 FR 8518698**

(43) Date de publication de la demande:
**01.07.87 Bulletin 87/27**

(45) Mention de la délivrance du brevet:
**19.12.90 Bulletin 90/51**

(84) Etats contractants désignés:
**DE GB IT NL**

(56) Documents cités:
**DE-A- 1 565 671**
**DE-A- 2 327 488**
**DE-C- 3 430 256**
**US-A- 2 938 996**
**US-A- 2 944 525**
**US-A- 3 269 275**
**US-A- 3 441 263**

(73) Titulaire: **VIDEOCOLOR, 7, boulevard Romain-Rolland,
F-92128 Montrouge(FR)**

(72) Inventeur: **Cote, Daniel, Thomson-CSF SCPI 19, avenue
de Messine, F-75008 Paris(FR)**

(74) Mandataire: **Einsel, Robert, Dipl.-Ing., Deutsche
Thomson-Brandt GmbH Patent- und Lizenzabteilung
Göttinger Chaussee 76, D-3000 Hannover 91(DE)**

## Description

La présente invention se rapporte à un vérin bi-pression.

Il arrive que dans certains cas, tels que la soudure par points, on doive exercer en un point d'un matériau successivement deux pressions différentes: l'une, plus élevée, pour déformer le matériau, et l'autre, moins élevée, pour maintenir la partie déformée contre la surface d'un autre matériau pendant la soudure. Actuellement, pour réaliser de telles opérations on peut soit utiliser deux pressions de fluide de vérin différentes, soit associer un vérin à un dispositif de positionnement à came. Dans les deux cas, l'appareillage utilisé est complexe et encombrant.

On connaît d'après le document DE-C 3 430 256 un vérin permettant d'excercer successivement sur une pièce des pressions différentes, mais ces pressions sont exercées pour une seule et même position de la tige de sortie de ce vérin.

La présente invention a pour objet un vérin permettant d'exercer successivement deux pressions différentes à des positions différentes de la tige de sortie du vérin, à l'aide d'une seule pression de fluide de commande, en mettant en œuvre des moyens simples et peu encombrants.

Le vérin conforme à l'invention est un vérin bi-pression comportant un corps divisé en deux cylindres par une cloison transversale, un premier piston flottant se déplaçant dans l'un des cylindres, ce premier piston étant conformé en cylindre pour une première partie d'un second piston dont la seconde partie se déplace dans l'autre cylindre, les deux parties du second piston étant reliées entre elles par une tige traversant ladite cloison transversale, une première chambre étant formée entre la cloison transversale et le premier piston, une seconde chambre étant formée entre la cloison transversale et la seconde partie du second piston, une troisième chambre étant formée dans le premier piston et délimitée par le cylindre formé par ce premier piston et la première partie du second piston, un premier passage de fluide débouchant dans la troisième chambre, et un second passage de fluide débouchant dans l'une quelconque des première ou seconde chambres, caractérisé par le fait que la cloison transversale est percée d'orifices, et que le premier piston vient en butée contre la cloison ou contre une butée opposée à cette cloison et fixée sur le corps du vérin, ces deux butées déterminant deux positions de travail du vérin et par le fait que la surface active du premier piston est différente de celle de la seconde partie du second piston.

La présente invention sera mieux comprise à la lecture de la description détaillée d'un mode de réalisation pris comme exemple non limitatif et illustré par le dessin annexé, sur lequel:

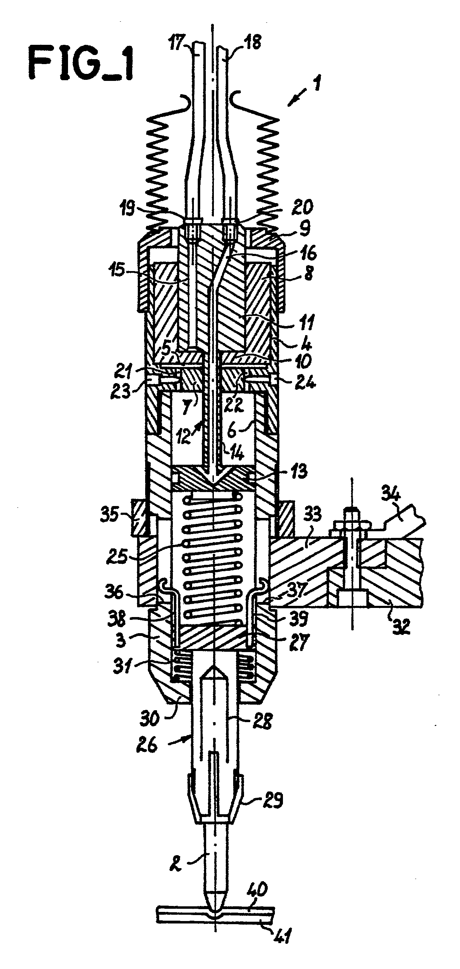

- la figure 1 est une vue en coupe axiale d'un vérin conforme à l'invention, et
- les figures 2 à 4 sont des vues en coupe partielle du vérin de la figure 1, dans trois positions caractéristiques.

L'invention est décrite ci-dessous en référence à un vérin bi-pression utilisé en soudage, mais il est bien entendu que l'invention n'est pas limité à une telle application.

Le fluide d'actionnement du vérin de l'invention peut aussi bien être pneumatique qu'hydraulique, aussi, il ne sera question par la suite que de fluide d'actionnement, sans autre précision. En outre, le même vérin étant représenté sur les quatre figures du dessin, les mêmes éléments représentés sur les différentes figures sont affectés des mêmes références numériques.

Le vérin 1 étant, dans le cas présent, destiné à actionner une électrode de soudure 2, son corps comporte une partie Antérieure 3 (côté électrode) en matériau isolant mécaniquement résistant, et une partie postérieure 4 métallique, mais il est bien entendu que dans d'autres applications ne nécessitant pas d'isolement électrique, le corps du vérin peut être réalisé en une seule pièce, de préférence métallique.

Le corps du vérin 1 est divisé en deux cylindres par une cloison transversale 7 formée dans la partie de corps 4, près de sa jonction avec la partie 3. Deux chambres 5, 6 sont formées dans les cylindres des parties de corps 4, 3 respectivement.

Un premier piston 8 se déplace dans la partie de corps 4 entre la cloison 7 et une molette cylindrique 9 en forme de bague à collerette rabattue vers l'intérieur et se vissant à la partie postérieure du corps 4, sur sa surface extérieure par exemple, comme représenté sur le dessin. Cette molette 9 forme ainsi une butée réglable pour le piston 8.

Le piston 8 est en forme de cylindre creux fermé sur sa face antérieure par une paroi 10, et son volume intérieur détermine une autre chambre 8A avec la partie arrière 11 d'un second piston 12 qui comporte une partie antérieure 13 se déplaçant dans la partie de corps 3 en déterminant la chambre 6 avec la cloison 7, les deux parties 11 et 13 du piston 12 étant reliées entre elles par une tige 14 traversant les cloisons 7 et 10 de façon étanche. La course du piston 12 est limitée lors du déplacement vers l'avant lorsque la face antérieure de la partie 11 du piston 12 vient en butée contre la paroi 10 du piston 8, ce dernier étant en butée contre la cloison 7, et lors du déplacement vers l'arrière lorsque la partie 13 du piston 12 vient en butée contre la paroi 7. La partie 11 du piston 12 traverse librement la molette 9. Bien entendu, la longueur du piston 8 et des différentes parties du piston 12 sont telles que lorsque la partie 13 du piston 12 vient en butée contre la paroi 7, la partie 11 du piston 12 ne sorte pas entièrement du piston 8 et soit encore bien guidée dans ce dernier.

On pratique dans la partie 11 du piston 12 un premier perçage 15, parallèle à son axe, mais éloigné de cet axe, ce perçage 15 traversant entièrement la partie 11. On pratique un second perçage 16 traversant axialement la tige 14 et débouchant d'une part à la face postérieure de la partie 13, et d'autre part à la face postérieure de la partie 11 qu'il traverse, dans le cas présent, pour des raisons d'encombrement des bornes de raccordement des conduites de fluide, axialement sur environ la moitié de sa longueur, puis s'éloigne de l'axe pour déboucher à la face postérieure de la pièce 11 en un point sensiblement symétrique, par rapport à l'axe de la pièce 11, de l'embouchure du perçage 15. Des conduites de fluide 17, 18 sont reliées aux perçages 15, 16 respectivement via des bornes 19, 20 fixées aux embouchures de ces perçages, à la face postérieure de la pièce 11. Les conduites 17, 18 sont reliées, de façon non repésentée, à une source unique de fluide d'actionnement qui envoie sélectivement le fluide à l'une ou l'autre de ces conduites. Bien entendu, on pourrait fixer à l'arrière de la pièce 11 un dispositif d'aiguillage de fluide à électro-vannes, et dans ce cas n'utiliser qu'une seule conduite de fluide pour la liaison à la source, mais un tel dispositif serait encombrant.

On pratique dans la paroi 7 deux perçages 21, 22 faisant communiquer les chambres 5 et 6, et pouvant être obturés de façon variable par des pointeaux réglables 23, 24 respectivement.

La face antérieure du piston 12 commande, par l'intermédiaire d'un ressort hélicoïdal, le porte-électrode 26 au bout duquel est fixée l'électrode 2. Le porte-électrode 26 se présente sous forme d'un piston 27, se déplaçant avec le minimum de frottements à l'intérieur du corps de vérin 3, à la face antérieure duquel est fixée une tige 28 munie à son extrémité libre de moyens 29 de fixation d'électrode appropriés. La paroi transversale antérieure 30 du corps de vérin, qui présente une ouverture pour le passage de la tige 28, sert d'appui à un ressort hélicoïdal 31 disposé entre cette paroi et le piston 27, autour de la tige 28.

Le vérin 1 est fixé sur un support 32 en matériau électriquement isolant par l'intermédiaire d'une bride 33 électriquement conductrice et reliée par un câble 34 à un générateur de courant de soudage (non représenté). La bride 33 enserre le corps 3 à peu près à mi-longueur et coopère avec un dispositif 35 de réglage en position axiale du vérin par rapport à son support. Ce dispositif 35 peut être une bague filetée intérieurement, solidaire de la bride 33 (fixe en translation mais mobile en rotation par rapport à cette bride), se vissant sur le corps 3 fileté extérieurement au niveau de cette bague.

Au niveau de la bride 33, on pratique dans le corps 3 deux ouvertures rectangulaires 36, 37 s'étendant selon des génératrices diamétralement opposées du corps. Deux lamelles de contact électrique 38, 39, de forme appropriée, fixées sur le piston 37, passent par les ouvertures 36, 37 respectivement et constituent un contact glissant sur la face interne de la bride 33 accessible par ces ouvertures. Bien entendu, les dimensions des ouvertures 36, 37 et l'épaisseur (dans le sens de l'axe du vérin) de la bride 33 sont telles que le contact électrique soit assuré entre les lamelles 38, 39 et la bride 33 pour toute la course du piston 27.

Pour assurer l'isolation électrique entre le piston 27 et le piston 12, on peut faire appel à différents moyens, par exemple en réalisant en matériau électriquement isolant la tige 14 et/ou la partie 13 du piston 12, ou tout au moins en interposant un isolant entre le ressort 25 et la partie 13.

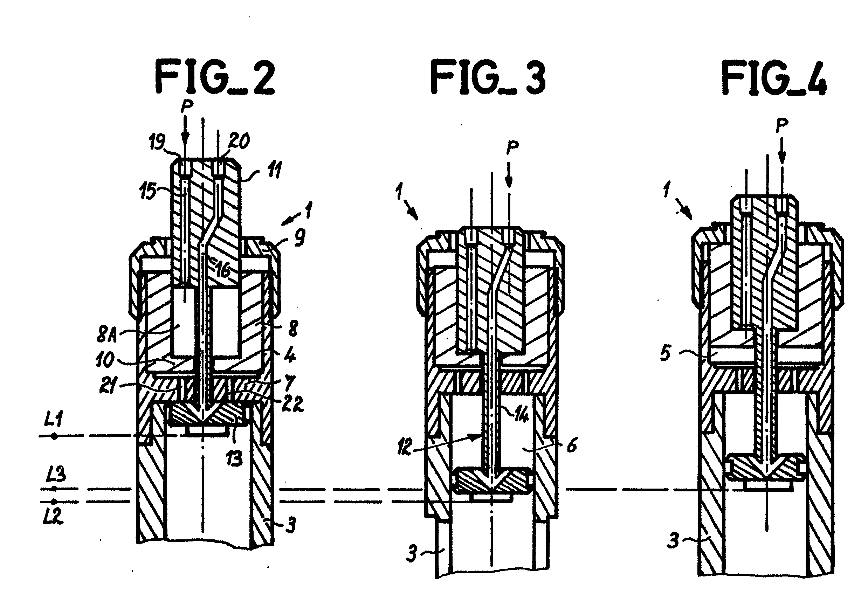

On va maintenant expliquer à l'aide des figures 2 à 4 le fonctionnement du vérin 1.

En position de repos (figure 2), l'électrode 2 est en position haute, la pression P du fluide d'actionnement est appliquée à la borne 19, la chambre 8A est à son volume maximal, la partie 13 du piston 12 étant en butée contre la face antérieure de la paroi 7 (position L1), et le piston 8 est dans sa position basse.

En position de travail (figure 3), c'est-à-dire pour laquelle l'électrode 2 doit arriver dans sa position la plus basse, la pression P est appliquée à la borne 20 et fait descendre le piston 12 jusqu'à ce que la partie 11 arrive en butée contre la cloison 10, ceci à condition, bien entendu, que le débit de fluide passant par les orifices 21, 22 soit inférieur au débit du fluide incident passant par l'orifice 16, condition qui peut être facilement remplie grâce à un réglage approprié des vis 23, 24. La partie 13 du piston 12 est en position basse, référencée L2 sur le dessin. Toutefois, le fluide, en passant par les orifices 21, 22 fait augmenter le volume de la chambre 5 en soulevant le piston 8 jusqu'à ce qu'il vienne en butée contre la bague 9. La partie 13 du piston 12 est légèrement au-dessus de sa position basse, en position référencée L3 sur le dessin. On obtient alors la position de "soudure" (figure 4), ceci à condition, bien entendu, que la surface active du piston 8 soit supérieure à la surface active de la partie 13 du piston 12, la pression de fluide P étant constante tout au long de ce processus. Pour revenir en position de repos, il suffit d'appliquer à nouveau la pression P à la borne 19.

Ainsi, dans le cas de l'utilisation du vérin 1 pour l'actionnement d'une électrode de soudage 2, en vue du soudage par points de deux lamelles ou tôles métalliques 40, 41 (l'électrode 2 venant en contact avec la lamelle 40), le piston 12, en descendant en position basse (figure 3), force l'électrode 2 à emboutir sur une zone presque ponctuelle les deux lamelles à souder ensemble, la lamelle supérieure 40 étant, bien entendu, davantage emboutie. La pression étant ensuite appliquée à la chambre 8A fait remonter légèrement le piston 12 en position de soudage (sur la figure 4, on a exagéré la remontée du piston 8 pour la clarté du dessin). Cette remontée du piston 12 diminue la pression de l'électrode 2 sur les lamelles à souder, sans toutefois l'annuler (le ressort 25 contribue à cette pression), ce qui fait que la face convexe de la zone emboutie de la lamelle 40 reste en bon contact avec la zone concave légèrement emboutie de la lamelle 41, alors qu'autour de cette zone emboutie, le contact entre les deux lamelles est presque inexistant, ou tout au moins suffisamment faible pour permettre de focaliser la quasi-totalité du courant de soudage dans cette zone emboutie, et donc de concentrer la zone chauffée, ce qui permet d'obtenir une soudure constante de haute qualité, et de supprimer les projections de métal fondu en enfermant le point de chauffe entre la partie convexe de la lamelle 40 et la partie légèrement concave de la lamelle 41. En outre, le fait de diminuer la pression sur l'électrode 2 lors de l'étape de soudage permet d'augmenter la résistance électrique entre les pièces à souder, et donc d'opérer avec un courant de plus faible intensité, et de régler de façon plus précise les paramètres de soudage. Grâce à la diminution de l'intensité du courant de soudage, l'électrode 2 est moins oxydée, ce qui permet de garder de façon plus durable son réglage et de réduire son entretien.

**Revendications**

1. Vérin bi-pression (1) comportant un corps divisé en deux cylindres (3, 4) par une cloison transversale (7), un premier piston (8) flottant se déplaçant dans l'un des cylindres (4), ce premier piston étant conformé en cylindre pour une première partie (11) d'un second piston (12) dont la seconde partie (13) se déplace dans l'autre cylidnre (3), les deux parties du second piston étant reliées entre elle par une tige (14) traversant ladite cloison transversale, une première chambre (5) étant formée entre la cloison transversale (7) et le premier piston (8), une seconde chambre (6) étant formée entre la cloison transversale (7) et la seconde partie (13) du second piston (12), une troisième chambre (8A) étant formée dans le premier piston (8) et délimitée par le cylindre formé par ce premier piston et la première partie (11) du second piston (12), un premier passage de fluide (15) débouchant dans la troisième chambre, et un second passage de fluide (16) débouchant dans l'une quelconque des première ou seconde chambres (5, 6), caractérisé par le fait que la cloison transversale (7) est percée d'orifices (21, 22), et que le premier piston (8) vient en butée contre la cloison (7) ou contre une butée (9) opposée à cette cloison et fixée sur le corps (3, 4), du vérin, ces deux butées déterminant deux positions de travail (L2, L3) du vérin, et que la surface active du premier piston (8) est différente de celle de la seconde partie (13) du second piston (12).

2. Vérin bi-pression selon la revendication 1, caractérisé par le fait que ledit premier passage (15) d'amenée de fluide est pratiqué dans la première partie (11) du second piston (12), et que ledit second passage (16) traverse ladite première partie du second piston, la tige (14) de ce dernier, et partiellement la seconde partie (13) du second piston (12), en débouchant vers ladite cloison transversale (7).

3. Vérin bi-pression selon la revendication 2, caractérisé par le fait que la tige (14) du second piston (12) traverse de façon étanche la cloison transversale (7), et que les orifices (21, 22) pratiqués dans cette cloison sont à ouverture réglable (23, 24).

4. Vérin bi-pression selon la revendication 3, caractérisé par le fait que le débit de fluide à travers les orifices (21, 22) de la cloison transversale (7) est inférieur au débit de fluide passant par le second perçage (16).

5. Vérin selon l'une quelconque des revendications précédentes, caractérisé par le fait que la seconde partie (13) du second piston (12) est reliée par l'intermédiaire d'un ressort (25) à la tige de sortie (28) du vérin.

6. Vérin selon l'une quelconque des revendications précédentes, caractérisé par le fait que la course du premier piston (8) est limitée de façon réglable par une molette (9) vissée sur le corps du vérin.

7. Vérin selon l'une quelconque des revendications précédentes, caractérisé par le fait que la surface active du premier piston (8) est supérieure à la surface active de la seconde partie (13) du second piston (12).

**Claims**

1. A two-pressure cylinder (1) comprising a body divided into two cylinders (3, 4) by a transverse partition (7), a first floating piston (8) moving in one of the cylinders (4), this first piston being formed as a cylinder for a first part (11) of a second piston (12), the second part (13) of which moves in the other cylinder (3), both parts of the second piston being connected to each other by a rod (14) passing through said transverse partition, a first chamber (5) being formed between the transverse partition (7) and the first piston (8), a second chamber (6) being formed between the transverse partition (7) and the second part (13) of the second piston (12), and third chamber (8A) being formed in the first piston (8) and being limited by the cylinder formed by this first piston and the first part (11) of the second piston (12), a first fluid duct (15) opening into the third chamber and second fluid duct (16) into any of the first or second chambers (5, 6) characterized in that orifices (21, 22) are drilled in the transverse partition (7), that the first piston (8) abuts against the partition (7) or against a stop (9) opposite to this partition and fixed on the body (3, 4) of the cylinder, these two stops defining two working positions (L2, L3) of the cylinder, and in that the active surface of the first piston (8) is different from that of the second part (13) of the second piston (12).

2. A two-pressure cylinder according to claim 1, characterized in that the first fluid supply duct (15) is bored in the first part (11) of the second piston (12) and that said second duct (16) passes through said first part of the second piston, the rod (14) of the latter and partially the second part (13) of the second piston (12), by opening into said transverse partition (7).

3. A two-pressure cylinder according to claim 2, characterized in that the rod (14) of the second piston (12) passes through the transverse partition (7) in a tight way and that the orifices (21, 22) bored in this partition have adjustable openings (23, 24).

4. A two-pressure cylinder according to claim 3, characterized in that the fluid throughput through the orifices (21, 22) of the transverse partition (7) is less than the fluid throughput through the second drilling (16).

5. A cylinder according to any of the preceding claims, characterized in that the second part (13) of the second piston (12) is connected by a spring (25) to the output rod (28) of the cylinder.

6. A cylinder according to any of the preceding claims, characterized in that the stroke of the first piston (8) is adjustably limited by a wheel (9) screwed on the body of the cylinder.

7. A cylinder according to any of the preceding claims, characterized in that the active surface of the first piston (8) is bigger than the active surface of the second part (13) of the second piston (12).

**Patentansprüche**

1. Zweidruckzylinder (1), bestehend aus einem, durch eine Quertrennwand (7) in zwei Zylinder (3, 4) geteilten Körper, einem ersten schwimmenden Kolben (8), der sich in einem (4) der Zylinder bewegt, wobei dieser erste Kolben für einen ersten Teil (11) eines zweiten Kolbens (12) als Zylinder ausgebildet ist, dessen zweiter Teil (13) sich im anderen Zylinder (3) bewegt, wobei die beiden Teile des zweiten Kolbens durch eine die genannte Quertrennwand durchdringende Stange (14) miteinander verbunden sind, wobei zwischen der Quertrennwand (7) und dem ersten Kolben (8) eine erste Kammer (5) ausgebildet ist, zwischen der Quertrennwand (7) und dem zweiten Teil (13) des zweiten Kolbens (12) eine zweite Kammer (6), eine dritte Kammer (8A) im ersten Kolben (8), begrenzt durch den durch den ersten Kolben und den ersten Teil (11) des zweiten Kolbens (12) gebildeten Zylinder, ausgebildet ist, wobei ein erster Durchgang (15) für Hydraulikflüssigkeit in der dritten Kammer mündet und ein zweiter Durchgang (16) für Hydraulikflüssigkeit in der ersten (5) oder der zweiten Kammer (6), dadurch gekennzeichnet, daß die Quertrennwand (7) zwei Öffnungen (21, 22) aufweist und daß der erste Kolben (8) an der Quertrennwand (7) oder an einem dieser Trennwand gegenüberliegenden und am Körper (3, 4) des Zylinders befestigten Anschlag (9) anschlägt, wobei diese beiden Anschläge zwei Arbeitsstellungen (L2, L3) des Zylinders bestimmen, und daß die wirksame Oberfläche des ersten Kolbens (8) sich von der des zweiten Teils (13) des zweiten Kolbens (12) unterscheidet.

2. Zweidruckzylinder gemäß Patentanspruch 1, dadurch gekennzeichnet, daß der genannte erste Durchgang (15) für die Zufuhr von Hydraulikflüssigkeit im ersten Teil (11) des zweiten Kolbens (12) angeordnet ist und daß der genannte zweite Durchgang (16) den genannten ersten Teil des zweiten Kolbens, die Stange (14) des letzteren und teilweise den zweiten Teil (13) des zweiten Kolbens (12) durchquert, um in der genannten Quertrennwand (7) zu münden.

3. Zweidruckzylinder gemäß Patentanspruch 2, dadurch gekennzeichnet, daß die Stange (14) des zweiten Kolbens (12) die Quertrennwand (7) abgedichtet durchquert, und daß die in dieser Trennwand (7) angeordneten Öffnungen (21, 22) einstellbare Öffnungen (23, 24) aufweisen.

4. Zweidruckzylinder gemäß Patentanspruch 3, dadurch gekennzeichnet, daß die Durchflußmenge der Hydraulikflüssigkeit durch die Öffnungen (21, 22) der Quertrennwand (7) geringer ist, als die Durchflußmenge der Hydraulikflüssigkeit durch die zweite Durchbrechung (16).

5. Zweidruckzylinder nach irgendeinem der vorangehenden Patentansprüche, dadurch gekennzeichnet, daß der zweite Teil (13) des zweiten Kolbens (12) mit der Ausgangsstange (28) des Zylinders über eine Feder (25) verbunden ist.

6. Zweidruckzylinder nach irgendeinem der vorangehenden Patentansprüche, dadurch gekennzeichnet, daß der Weg des ersten Kolbens (8) auf durch ein Rändelrad (9) einstellbare Weise begrenzt ist, das auf den Körper des Zylinders geschraubt ist.

7. Zweidruckzylinder nach irgendeinem der vorangehenden Patentansprüche, dadurch gekennzeichnet, daß die wirksame Oberfläche des ersten Kolbens (8) größer ist, als die wirksame Oberfläche des zweiten Teils (13) des zweiten Kolbens (12).

FIG_1

# FIG_2    FIG_3    FIG_4

EP 0 227 543 B1